# EUROPEAN PATENT APPLICATION

(11) **EP 4 631 665 A1**
(43) Date of publication of application: **15.10.2025**
(21) Application number: 24169813.3
(22) Date of filing: 11.04.2024
(51) Int. Cl.: B23K 26/08, B23K 26/142, B23K 26/38, B23K 103/00

(54) **WORKING SUPPORT FOR LASER CUTTING AND CONVEYOR BELT COMPRISING WORKING SUPPORT**

(71) Applicant: SEI S.p.A., 24035 Curno (BG) (IT)
(72) Inventor: FUSTINONI, Ettore, 24035 Curno (BG) (IT)
(74) Representative: Gislon, Gabriele

(57) **Abstract**

The present invention relates to a working support (10) and to a conveyor belt (100) comprising such a working support (10) for laser cutting and/or marking operation, the working support (10) comprising
• at least one vacuum chamber (1) connected to at least one vacuum element (2);
• a honeycomb structure (3) comprising a plurality of cells (30), which is arranged spaced from the vacuum chamber (1);
• an intermediate depression chamber (21) which is defined between said honeycomb structure (3) and said vacuum chamber (1);
wherein
the lower surface (22) of said intermediate depression chamber (21) has a plurality of suction holes (13) which fluidically connect said vacuum chamber (1) with the cells (30) of said honeycomb structure (3).

## Description

### Field of the invention

The present invention relates to the field of handling, supporting and holding sheet material, preferably paperboard, carton, cardboard and corrugated cardboard, during laser cutting and/or marking operation.

### Background of the invention

Laser cutting in the field of paper industry, and in particular in the field of carton, cardboard, cartonboard, corrugated cardboard, corrugated carton, and in general on thick paper sheet material, uses a focused high-power density laser beam to irradiate the sheet material, to quickly cutting the sheet material. Vacuum platforms or tables are used, by exploiting the vacuum principle to firmly hold sheet materials against the working support during processing. However, existing vacuum platforms, especially in field of paper industry, do not achieve an efficient and homogeneous vacuum or depression: as will be better discussed in the following, existing vacuum platforms do not satisfy different needs, among which a high and homogeneous depression, efficient evacuation of fumes, dust and smokes, negligible laser power reflections which would otherwise affect the final product.

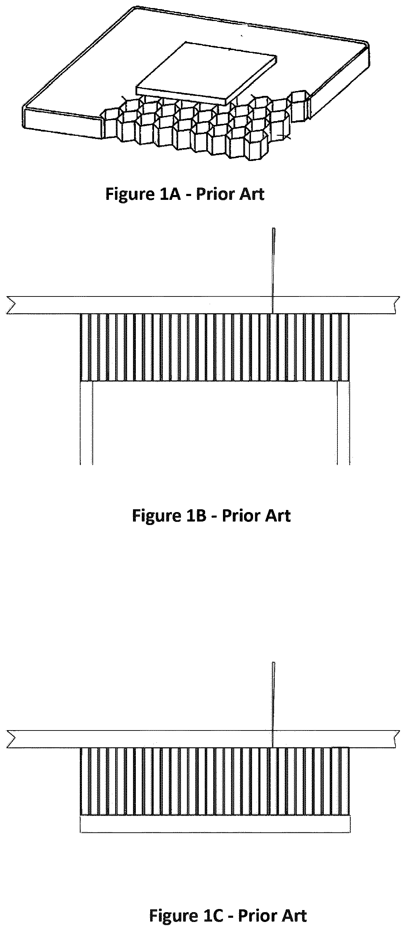

The traditional vacuum working platforms for laser cutting comprise honeycomb structures as the one shown in figure 1A, directly arranged above a vacuum chamber (Fig. 1B), or arranged on a flat platform provided with holes (Fig. 1C) above a vacuum chamber, which is connected to the vacuum generating elements through holes and air path connectors.

This may result in inefficient or uneven suction, thus affecting the processing accuracy of the workpiece.

An uneven and inhomogeneous suction can lead to unwanted displacement of the sheet during the cutting process.

Furthermore, when the sheet material to be cut is a sheet of corrugated cardboard (which can be up to 15 mm thick), it can be laid on the platform in a configuration that is not completely flat (as would be desirable for optimal processing), since it may be arranged on the vacuum platform with unwanted folds, or it may have been deformed, e.g. during transport or packaging operations, and take on an unwanted curvature, which makes the sheet material unsuitable for precise cutting operations.

Furthermore, during the cutting process, fumes, exhaust gas and cutting waste will be generated. However, most of the current vacuum working platforms for laser cutting, as those schematically shown in figures 1B and 1C do not efficiently remove fumes, exhaust gas and cutting waste.

It is found that known art has the following disadvantages.

The fumes, dust and exhaust gas generated will directly affect the working environment and the sheet material to be cut, and are harmful for the health of workers.

Fumes that are not effectively removed will affect sheet material generating blackening and smoke contamination of the environment, affecting the quality of the final product.

Consequently, frequent shutdowns are required for cleaning fumes residuals, which not only affects product processing efficiency, but also is tiring work for an operator, time-consuming and expensive, since the cost of manual waste cleaning is also high.

Furthermore, during the traditional cutting process, reflections of the laser beam are generated. However, most of the current vacuum working platforms for laser cutting as those schematically shown in figures 1B and 1C, do not efficiently disperse reflected radiation, which is reflected directly onto the material being processed, causing unwanted burns.

It is thus an object of the present invention to provide a solution to the above-mentioned problem.

It is in particular an object of the present invention to provide a solution that provides a precise and accurate positioning and flattening of the sheet material during laser cut.

It is another object of the present invention to provide a working support that allows laser cutting on carton, paperboard, cardboard, corrugated cardboard, and in general on thick paper sheet material while minimising possible blackening caused by fumes produced by the cutting operation itself.

It is another object of the present invention to provide a working support that allows laser cutting on carton, paperboard, cardboard, corrugated cardboard, and in general on thick paper sheet material while minimising possible burns caused by possible reflections of the laser beam.

It is another object of the present invention to provide the above-mentioned solution in a manner that can be implemented also in existing machines.

It is also an object of the present invention to provide a machine (or system) for cutting bi-dimensional objects from sheet material, allowing a precise and accurate positioning of the obtained bi-dimensional objects.

### Summary of the invention

These and other objects are achieved by the present solution according to one or more of the enclosed claims.

Objects of the present invention are in particular a working support and a conveyor belt comprising the working support, for handling, supporting and holding sheet material, preferably carton, paperboard, cardboard, corrugated cardboard, and in general thick paper sheet material, during laser cutting and/or marking operation, and a machine comprising such a conveyor belt, according to claims 1, 8 and 11 respectively. Preferred aspects are recited in the other dependent claims.

The present invention is directed to a working support for laser cutting and/or marking operation, comprising
- at least one vacuum chamber connected to at least one vacuum element;
- a honeycomb structure comprising a plurality of cells, which is arranged spaced from the vacuum chamber;
- an intermediate depression chamber which is defined between said honeycomb structure and said vacuum chamber;
wherein the lower surface of said intermediate depression chamber has a plurality of suction holes which fluidically connect said vacuum chamber with the cells of said honeycomb structure.

Advantageously, compared to devices known in the technique, the presence of an intermediate depression chamber allows to avoid stagnation of fumes generated by the laser cutting, thanks to better and more uniform ventilation below the honeycomb structure: the presence of an intermediate chamber makes it possible to generate an air flow that circulates in a linear manner, without creating turbulence or stagnation of fumes below the honeycomb structure.

Furthermore, the presence of suction holes advantageously allows for rapid and effective fumes evacuation.

According to an aspect, the lower surface of said intermediate depression chamber is made of metallic material, or in general can be made of a material capable to manage the waste energy of the laser, in particular to reflect the residual radiation of the laser beam in such a manner to disperse it.

For example, the lower surface of said intermediate depression chamber can be made of aluminium or steel.

Advantageously, the lower surface of the intermediate depression chamber made of metallic material, or of a material capable to reflect the residual radiation of the laser beam, allows to disperse the reflections of the laser beam and its excess radiation, which passes through the sheet material being processed and is reflected on the lower surface of the intermediate chamber. In this way, the reflected radiation is dispersed to avoid reflection towards the sheet material being processed, which would lead to unwanted burning or blackening.

According to an aspect, the honeycomb structure is made of metallic material, preferably aluminium or steel.

According to an aspect, the upper surface of said honeycomb structure comprises ridges and depressions.

Advantageously, compared to devices known in the technique, the presence of a honeycomb structure with an upper surface provided with ridges and depressions allows the material being processed not entirely in contact with, i.e. not completely adhering to the honeycomb structure, and the space generated by the presence of ridges and depressions allows a linear and continuous air flow to be maintained, which avoids turbulence and stagnation of fumes, contrary to the known technique, where the honeycomb structure has a flat upper surface (a flat support surface for the sheet material).

Furthermore, advantageously, the presence of a honeycomb structure with an upper surface provided with ridges and depressions minimizes laser reflections because of the negligible area of supporting points (the ridges) of the sheet to be processed.

According to an aspect, the lower surface of said intermediate depression chamber has a cross-section with a wavy or sinusoidal profile.

According to an aspect, the lower surface of said intermediate depression chamber comprises a plurality of rectilinear grooves, parallel to each other. Advantageously, the wavy configuration of the lower surface of said intermediate depression chamber allows to disperse the reflections of the laser beam and its excess radiation, which passes through the sheet material being processed and is reflected on the lower surface of the intermediate chamber. In this way, the reflected radiation is dispersed to avoid reflection towards the sheet material being processed, which would lead to unwanted burning or blackening.

According to an aspect the honeycomb structure comprises a plurality of corrugated metal sheets welded together.

According to this aspect, each metal sheets has an upper profile provided with ridges and depressions, and a straight lower profile.

According to an aspect, the working support comprises spacer and support means to support said honeycomb structure such that the lower surface of the honeycomb structure is arranged at a distance from the lower surface of said intermediate depression chamber.

Advantageously, the presence of spacer and support means allows to provide for an intermediate depression chamber, taking the above mentioned advantages to generate an air flow that circulates in a linear manner, without creating turbulence or stagnation of fumes below the honeycomb structure. The present invention is further directed to a conveyor belt for handling, supporting and holding sheet material, preferably carton, paperboard, cardboard, corrugated cardboard, and in general thick paper sheet material, during laser cutting and/or marking operation, the conveyor belt comprising a plurality of interconnected slats arranged parallel to each other, wherein each slat comprises a working support according to the invention, connected to at least one vacuum element configured to provide air suction from the environment, to provide a holding force to draw and hold said sheet material. Advantageously, a conveyor belt provided with such a working support allows for a precise and accurate positioning of the sheet material to be cut, avoiding unintentional movement of the sheet during laser processing, and increasing productivity.

Advantageously, the conveyor belt can be implemented also in existing machines.

According to an aspect, each slat is provided with connection elements provided with connection means for interconnection with adjacent slats. According to an aspect, the connection means provide for a fluid-tight connection between adjacent slats.

Advantageously, fluid-tight connection between adjacent slats allows an optimal condition for creating the desired vacuum in the intermediate depression chambers.

The present invention is further directed to a machine for laser cutting and/or marking sheet material, preferably carton, paperboard, cardboard, corrugated cardboard, and in general thick paper sheet material comprising a laser apparatus and a conveyor belt according to the invention.

### Description of the figures

One or more embodiments of the present invention are now described in greater detail with reference to the accompanying drawings provided by way of non-limiting example, wherein:
- Figure 1A is a schematic view of a honeycomb structure according to prior art;
- Figure 1B and 1C are schematic views of two possible embodiments of a working support according to prior art;
- Figure 2A is a cross-section of a working support for supporting and holding sheet material during laser cutting and/or marking operation, according to a possible embodiment of the invention;
- Figure 2B is a cross-section of a slat of a conveyor belt for handling, supporting and holding sheet material during laser cutting and/or marking operation, comprising a working support, according to a possible embodiment of the invention;
- Figure 3 is a perspective view of the honeycomb structure according to a possible embodiment of the invention;
- Figure 4 is a perspective view of a portion of a slat of a conveyor belt according to a possible embodiment of the invention;
- Figure 5 is a perspective view of a slat of a conveyor belt provided with a working support according to a possible embodiment of the invention;
- Figure 6A schematically shows a cross section of a working support according to a possible embodiment of the invention;
- Figure 6B schematically shows a cross section of a working support according to a possible embodiment of the invention during use, i.e. when a vacuum element is operated to generate a depression or partial vacuum;
- Figure 7 is schematic side view of a possible embodiment of a conveyor belt according to the invention.
- Figure 8 is a perspective view of a possible embodiment of the machine according to the invention;
- Figure 9 is a detail view of a possible embodiment of the machine according to the invention.

### Detailed description of the invention

With reference to the figures, a working support 10 for supporting and holding sheet material, preferably carton, paperboard, cardboard, corrugated cardboard, and in general thick paper sheet material, during laser cutting and/or marking operation, comprises at least one vacuum chamber 1, connected to at least one vacuum element 2, and a honeycomb structure 3, preferably made of metallic material, and comprising a plurality of cells 30.

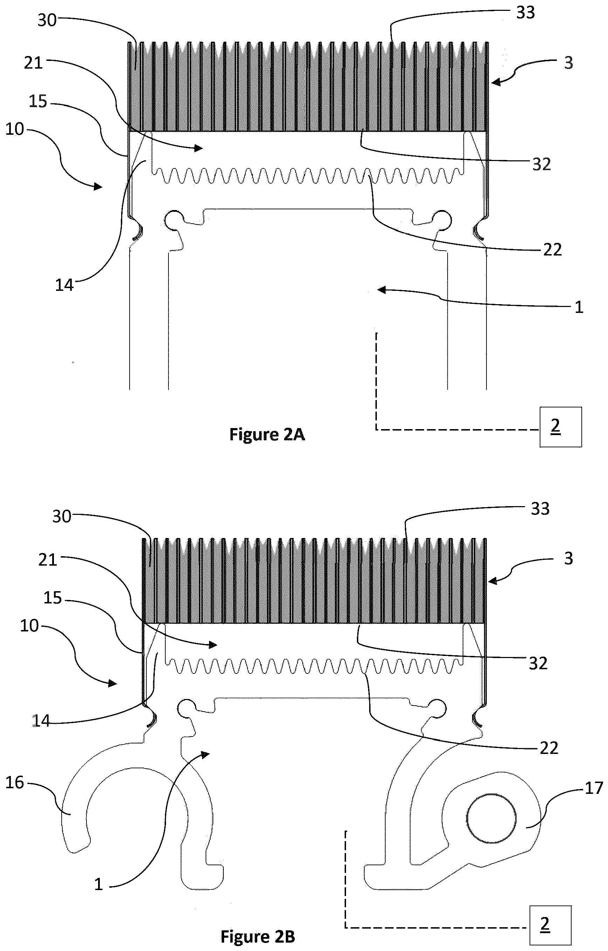

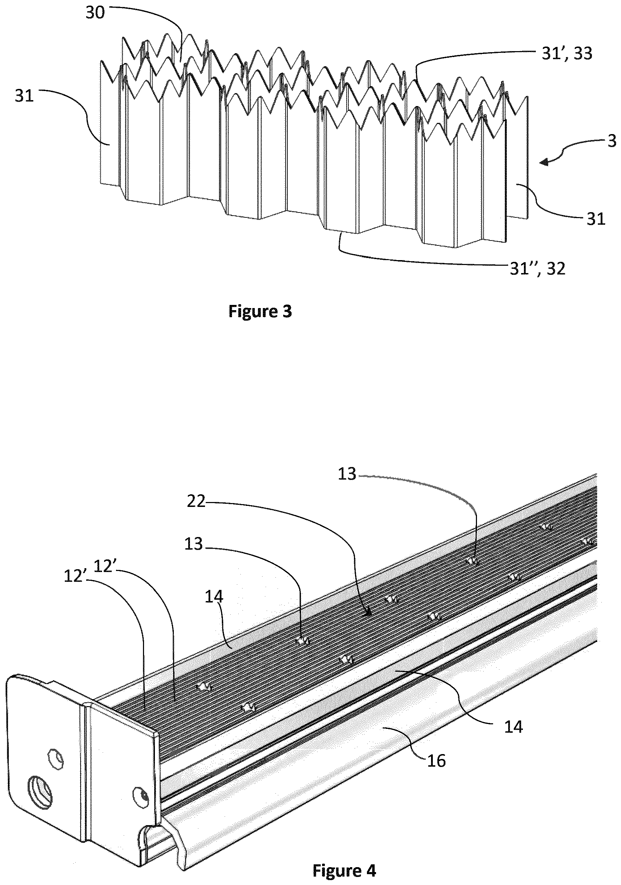

Preferably, the honeycomb structure 3 is made of aluminium or steel. According to a possible embodiment, shown by way of example in figure 2A, 2B and 3, the upper surface 33 of the honeycomb structure 3 comprises ridges and depressions.

As above mentioned, compared to the honeycomb structures of known in the technique, shown by way of example in figure 1A, the presence of a honeycomb structure 3 with an upper surface 33 provided with ridges and depressions allows the sheet material to be not entirely in contact with, i.e. not completely adhering to the honeycomb structure 3 during laser cut, in order to maintain a space between the sheet material and the honeycomb structure 23. As will be better discussed in the following, the space generated by the presence of ridges and depressions allows a linear and continuous air flow to be maintained, which avoids turbulence and stagnation of fumes, contrary to the known technique, where the honeycomb structure has a flat upper surface (a flat support surface for the sheet material).

With particular reference to figure 2A, 2B 6A and 6B, the honeycomb structure 3 is arranged spaced from the vacuum chamber 1, such that the honeycomb structure 3, and in particular the lower surface 32 of the honeycomb structure 3, is arranged at a distance L from the vacuum chamber 1.

It should be noted that preferably the distance L is comprised between 3mm and 10 mm, and preferably L is about 6.5 mm.

In other words, the working support 10 comprises an intermediate depression chamber 21, which is formed between the vacuum chamber 1 and the lower surface 32 of the honeycomb structure 3.

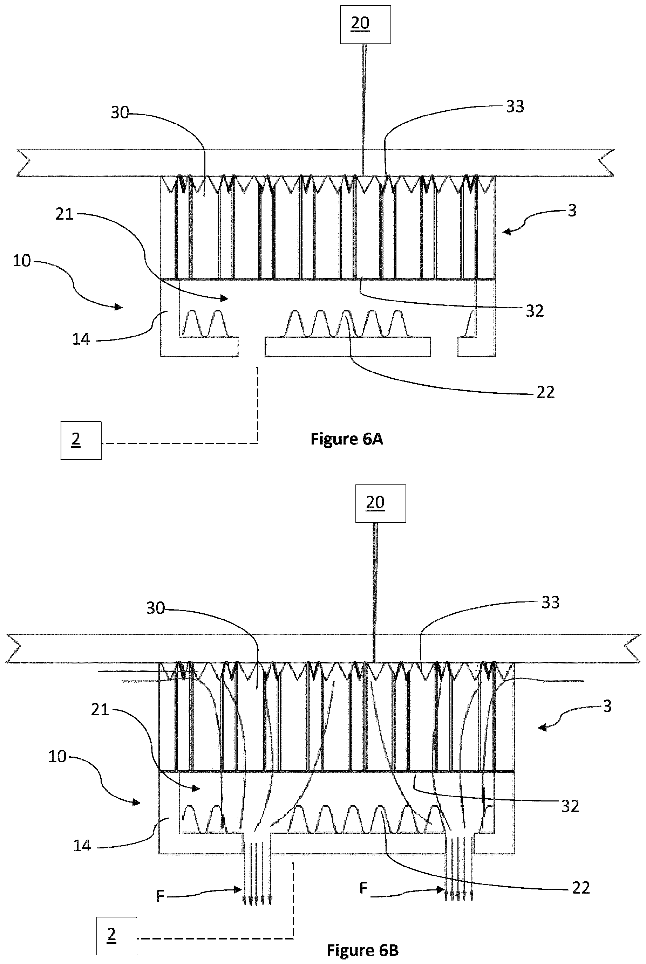

To this purpose, according to a possible embodiment, shown as an example in figures 2A, 2B, 4, 5, 6A and 6B the working support 10 comprises spacer and support means 14, 15 to support the honeycomb structure 3 such that the lower surface 32 of said honeycomb structure 3 is arranged at a distance L from said lower surface 22 of said intermediate depression chamber 21. With reference to figure 4, 6A and 6B, the lower surface 22 of the intermediate depression chamber 21 has a plurality of suction holes 13 which fluidically connect the vacuum chamber 1 with the cells 30 of said honeycomb structure 3.

Preferably, the lower surface 22 of the intermediate depression chamber 21 is made of metallic material and preferably it is made of aluminium or steel.

It should be noted that in general the lower surface 22 of the intermediate depression chamber 21 can be made of a material capable to manage the waste energy of the laser, in particular to reflect the residual radiation of the laser beam in such a manner to disperse it, such as metal alloys, ceramics, suitable composite materials.

According to a possible embodiment, the suction holes 13 have a diameter of between 2 mm and 8 mm, preferably equal to 5 mm.

As shown in figure 6A and 6B, suction holes 13 fluidically connect the vacuum chamber 1 with the intermediate depression chamber 21, and with the cells 30 of the honeycomb structure 3.

The working support 10 is typically arranged to support and firmly hold the sheet material, i.e. it is arranged so that, during use, the sheet material is firmly held against the upper surface 33 of the honeycomb structure 3, and in particular it is supported on the ridges of the honeycomb structure 3, i.e. the sheet material does not fully adhere to the upper surface 33 of the honeycomb structure 3, in order to maintain space between the sheet material and the honeycomb structure 3 to allow for a continuous, linear air flow.

This is obtained via a holding or suction force F, as shown by way of example in figure 6B, that draws the sheet material against the upper surface 33 (against the ridges) of the honeycomb structure 3 so that it can be held in the correct working position, during laser cutting or marking operation.

The suction force F is typically a distributed force, i.e. a force that acts on an area, instead of on a single application point. This is exemplified in figure 6B, where the arrows representing the suction force F are shown.

Preferably, the suction force F is provided by one or more vacuum elements (aspiration elements) 2.

As an example, a vacuum element 2 schematically shown in figure 6A or 6B can be a vacuum pump, and causes a flow of air directed downwards. As a result, a partial depression is caused in the intermediate depression chamber 21, under the honeycomb structure 3, that draws the sheet material against the upper surface 33 (against the ridges) of the honeycomb structure 3. Other kinds of vacuum elements 2, e.g. aspirators or similar means, can be used to draw the objects against the working support 10.

It is noted that, for simplicity, elements 2 are called "vacuum" (or aspiration) elements. It is however clear that those elements do not need to create vacuum in the intermediate depression chamber 21 or at the honeycomb structure 3, as a generic depression may be enough to attract the sheet material against the working support 10.

As above mentioned, the lower surface 22 of the intermediate depression chamber 21 is provided with one or more suction holes or apertures 13, preferably a plurality of suction holes or apertures 13, through which air can pass.

According to a possible embodiment, the honeycomb structure 3 comprises a plurality of corrugated metal sheets 31 welded together.

Preferably, each of said corrugated metal sheets 31 has an upper profile 31' provided with ridges and depressions, and a straight lower profile 31".

In other words, a plurality of corrugated metal sheets 31 with an upper profile 31' provided with ridges and depressions, and with a straight lower profile 31 "are welded together to form a honeycomb structure 3 with a plurality of cells 30.

It should be noted that the cells 30 have a hexagonal cross section, but square, rectangular, circular (or polygonal in general) cross-sections are other choices available, although hexagonal is generally the preferred choice.

According to a possible embodiment, shown by way of example in figure 2A and 4, the lower surface 22 of the intermediate depression chamber 21 has a cross-section with a wavy or sinusoidal profile.

As above mentioned, the wavy configuration of the lower surface 22 of the intermediate depression chamber 21 allows to disperse the reflections of the laser beam and its excess radiation, which passes through the sheet material and is reflected on the lower surface 22 of the intermediate chamber 21.

In this way, the reflected radiation is dispersed to avoid reflection towards the sheet material being processed, which would lead to unwanted burning or blackening.

With reference to figure 2A, a cross-section of the support element 10 is shown, wherein the upper surface of the vacuum chamber 1 is provided with wavy or sinusoidal profile.

According to a possible embodiment, shown by way of example in figure 4, the lower surface 22 of the intermediate depression chamber 21 is provided with a plurality of rectilinear grooves 12', parallel to each other.

According to a possible aspect of the invention, the working support 10 is coupled to a working table for supporting and holding sheet material, preferably carton, paperboard, cardboard, corrugated cardboard, and in general thick paper sheet material during laser cutting and/or marking operation.

In other words, according to a possible embodiment, not shown in the attached figures, the working support 10 is configured to fully or at least partially cover a planar and fixed (not movable) work surface, e.g. a work table connected to a a vacuum element, or a vacuum platform.

According to a further possible aspect of the invention, the working support 10 is coupled to (or part of) the slats 101 of a conveyor belt (system) 100 for handling, supporting and holding sheet material, preferably carton, paperboard, cardboard, corrugated cardboard, and in general thick paper sheet material, during laser cutting and/or marking operation.

Figure 2B shows the cross-section of a possible embodiment of a slat 101.

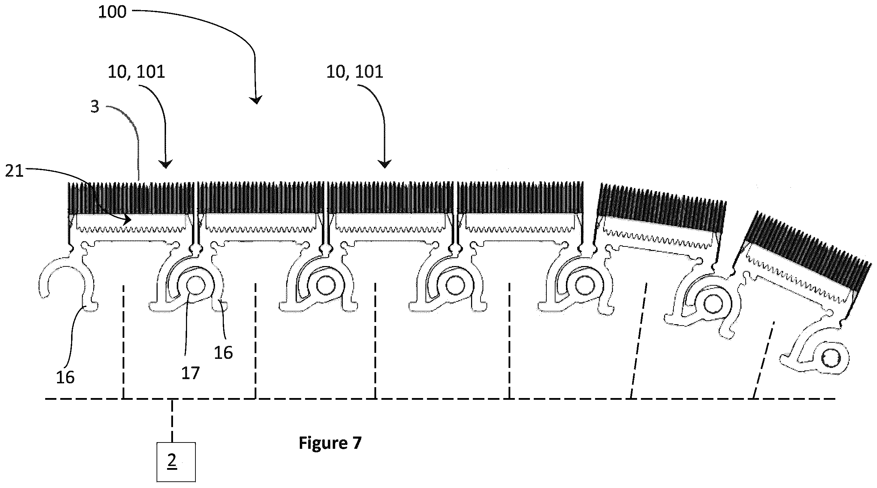

A possible embodiment of the conveyor belt 100 is for example shown in figure 7.

In particular, the working support 10 may be coupled to (and become part of) the slats 101 of a pre-existing conveyor belt 100.

The present invention in further directed to a conveyor belt 100 for handling, supporting and holding sheet material, preferably carton, paperboard, cardboard, corrugated cardboard, and in general thick paper sheet material, during laser cutting and/or marking operation.

With reference to figure 7, the conveyor belt 100 according to the invention comprises a plurality of interconnected slats 101 arranged parallel to each other, wherein each slat 101 comprises a working support 10 as described above, connected to at least one vacuum element 2.

Preferably the conveyor belt 100 is arranged above a vacuum chamber 1, connected to a vacuum generator element 2, and the conveyor belt 100 runs above this vacuum chamber 1, so that each working support 10 of each slat 101 is connected to this vacuum chamber 1 below.

In this way the conveyor belt 100 is configured to provide air suction from the environment, to provide a holding or suction force to hold sheet material. According to a possible embodiment, shown by way of example in figure 2B, each slat 101 is provided with connection elements 16, 17 for interconnection with adjacent slats.

Preferably, the connection elements 16, 17 provide for a fluid-tight connection between adjacent slats 101.

In a possible embodiment, each slat 101 is provided with a first connection element 16 which is configured as a hollow tubular profile, preferably circular in cross-section, but other shapes as polygonal or elliptical are not to be excluded.

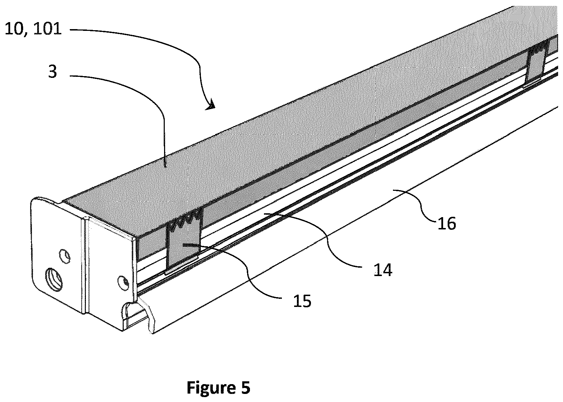

With reference to figure 4 and 5, the first connection element 16 runs longitudinally along the main direction of extension of the slat.

It should be noted that each first connection element 16 comprise an aperture that runs longitudinally along the main direction of extension of the connection element 16, in order to allow the insertion and coupling with the second connection element 17 of the adjacent slat 101.

Each slat 101 is further provided with a second connection element 17, which is configured to have a cross-sectional shape complementary to the cross-sectional shape of the first connection element 16.

Thus, the second connection element 17 comprises at least one tubular portion suitable for insertion into the first hollow connection element 16.

In the possible embodiment wherein the working support 10 is coupled to (and become part of) the slats 101 of a pre-existing conveyor belt 100, each slat 101 comprises an intermediate depression chamber 21 with a lower surface 22 which is provided with suction holes 13, which fluidically connect the vacuum chamber 1 with the cells 30 of the respective honeycomb structure 3. According to a possible embodiment, the lower surface 22 of the intermediate depression chamber 21 of each slat 101 is provided with a number of suction holes 13 comprised between 40 and 80, and having a diameter of between 2 mm and 8 mm, preferably equal to 5 mm.

For example, according to a configuration of 60 suction holes per slat 101, each having a diameter equal to 5mm, and using a vacuum element 2 with a capacity of approximately 4600 m3/h, following experimental data are obtained:
A depression (relative to atmospheric pressure) of 2500 Pa is created in the vacuum chamber 1 below the conveyor belt 100.

The air velocity inside the suction holes 13 is approximatively 4-5 m/s.

In the intermediate depression chamber 21 a depression (relative to atmospheric pressure) of 110-150 Pa is created.

On the working plane, i.e. at the upper surface 33 of the honeycomb structure 3, the air velocity is approximately 0.2-0.3 m/s, and is very homogeneous over the entire surface.

According to a possible aspect of the invention, the conveyor belt 100 is coupled to (or part of) a machine (system) M for processing the sheet material. In particular, the conveyor belt 100 may be coupled to (and become part of) a pre-existing machine.

The machine M comprises a conveyor belt 100, for handling, supporting and holding sheet material, preferably carton, paperboard, cardboard, corrugated cardboard, and in general thick paper sheet material, during laser cutting and/or marking operation.

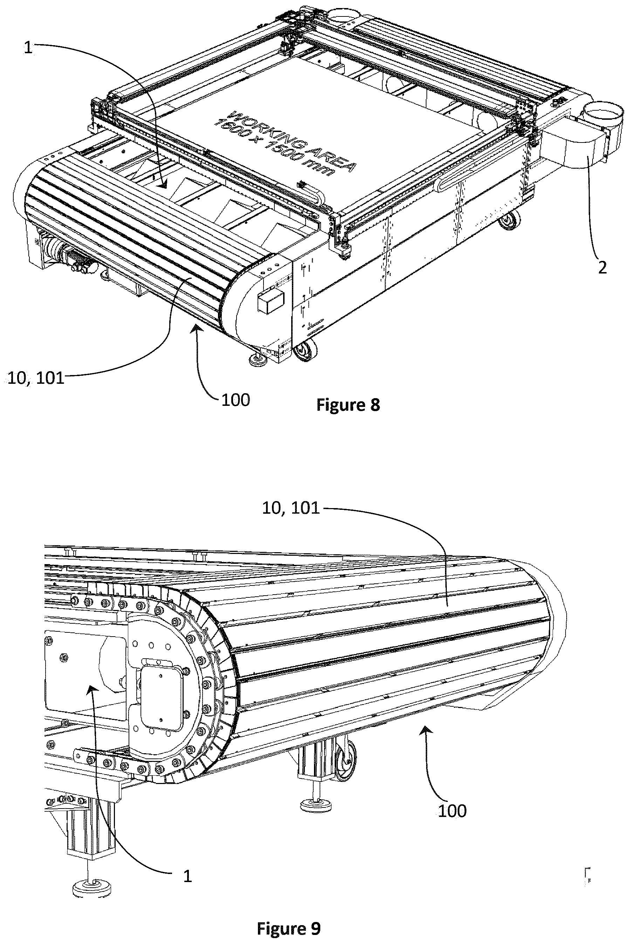

In fact, with reference to figures 8 and 9, the present invention is further directed to a machine M for laser cutting and/or marking sheet material, preferably carton, paperboard, cardboard, corrugated cardboard, and in general thick paper sheet material comprising a laser apparatus 20 and a conveyor belt 100 as described above.

The conveyor belt 100 of the machine M is typically arranged so as to sustain (support) and hold the sheet material from below in the correct and desired position, i.e. so that the sheet material lean on the machine conveyor 100. The conveyor belt 100 of the machine M is preferably arranged so that the sheet material move in a horizontal manner, avoiding the lifting movement (i.e. the upward movement against gravity) and transversal movement (i.e. transversal movement with respect to the travel direction of the conveyor). The sheet material is held against the conveyor belt 100, which is configured (as above described) to generate a machine holding or suction force that hold the sheet material against the conveyor 100. As an example, machine vacuum elements 2 as above described may be provided, as shown in figure 8.

The machine M is typically provided with a laser apparatus 20 performing one or more operations on the sheet material, such as cutting, engraving, marking etc.

In particular, the laser apparatus 20 is typically movable in at least two, preferably three, different direction, so as to follow a predetermined path. Preferably, the laser apparatus 20 is movable at least along a substantially horizontal plane.

After the cut operation (i.e. downstream the cut) the sheet material is thus divided into a plurality of objects, that are surrounded by a waste layer, i.e. the remaining part of the layer that is outside the objects.

A waste collecting device can be placed downstream the laser apparatus.

## Claims

1. Working support (10) for laser cutting and/or marking operation on sheet material, preferably carton, paperboard, cardboard, corrugated cardboard, and in general thick paper sheet material, comprising
• at least one vacuum chamber (1) connected to at least one vacuum element (2);
• a honeycomb structure (3) comprising a plurality of cells (30), which is arranged spaced from the vacuum chamber (1);
• an intermediate depression chamber (21) which is defined between said honeycomb structure (3) and said vacuum chamber (1);
wherein the lower surface (22) of said intermediate depression chamber (21) has a plurality of suction holes (13) which fluidically connect said vacuum chamber (1) with the cells (30) of said honeycomb structure (3).

2. Working support (10) according to claim 1, wherein the upper surface (33) of said honeycomb structure (3) comprises ridges and depressions.

3. Working support (10) according to one of the previous claims, wherein the lower surface (22) of said intermediate depression chamber (21) has a cross-section with a wavy or sinusoidal profile.

4. Working support (10) according to one of the previous claims, wherein the lower surface (22) of said intermediate depression chamber (21) comprises a plurality of rectilinear grooves (12'), parallel to each other.

5. Working support (10) according to one of the previous claims, wherein said honeycomb structure (3) comprises a plurality of corrugated metal sheets (31) welded together.

6. Working support (10) according to claim 5, wherein each of said corrugated metal sheets (31) has an upper profile (31') provided with ridges and depressions, and a straight lower profile (31").

7. Working support (10) according to one of the previous claims, comprising spacer and support means (14, 15) to support said honeycomb structure (3) such that the lower surface of said honeycomb structure (3) is arranged at a distance (L) from said lower surface (22) of said intermediate depression chamber (21).

8. Conveyor belt (100) for handling, supporting and holding sheet material, preferably carton, paperboard, cardboard, corrugated cardboard, and in general thick paper sheet material , during laser cutting and/or marking operation, the conveyor belt (100) comprising a plurality of interconnected slats (101) arranged parallel to each other, wherein each slat (101) comprises a working support (10) according to any claim 1 - 7, each working support (10) being connected to at least one vacuum element (2) configured to provide air suction from the environment, to provide a holding force to hold said sheet material.

9. Conveyor belt (100) according to claim 8, wherein each slat (101) is provided with connection elements (16, 17) provided with connection means (16, 17) for interconnection with adjacent slats.

10. Conveyor belt (100) according to claim 9, wherein said connection means (16, 17) provide for a fluid-tight connection between adjacent slats (101).

11. A machine (M) for laser cutting and/or marking sheet material, preferably carton, paperboard, cardboard, corrugated cardboard, and in general thick paper sheet material comprising a laser apparatus (20) and a conveyor belt (100) according to any claims 7 - 10.
